# EUROPÄISCHE PATENTSCHRIFT

(11) **EP 2 351 341 B1**
(45) Veröffentlichungstag und Bekanntmachung des Hinweises auf die Patenterteilung: **04.11.2020**
(21) Anmeldenummer: 09755835.7
(22) Anmeldetag: 18.09.2009
(51) Int. Cl.: G06F 3/14, G09G 3/34, H04M 1/02, H04W 52/02

(54) **VERFAHREN UND ANORDNUNG ZUR BILDGEBENDEN DARSTELLUNG VON INFORMATION, INSBESONDERE FÜR DEN EINSATZ BEI KOMMUNIKATIONSENDGERÄTEN**
METHOD AND DEVICE TO DISPLAY INFORMATION IN COMMUNICATION DEVICES
PROCÉDÉ ET DISPOSITIF D'AFFICHAGE D'INFORMATION DANS UN DISPOSITIF DE COMMUNICATION

(30) Priorität: 23.09.2008 DE 102008048447
(43) Veröffentlichungstag der Anmeldung: 03.08.2011
(73) Patentinhaber: Unify GmbH & Co. KG, 81739 München (DE)
(72) Erfinder: BRIESKORN, Jürgen, 82269 Geltendorf (DE); ERNST, Edmund, 81373 München (DE); KLUG, Karl, 83714 Miesbach (DE); SCHAADE, Stephan, 86807 Buchloe (DE)
(74) Vertreter: Fritzsche, Thomas
(86) Internationale Anmeldenummer: PCT/EP2009/006769
(87) Internationale Veröffentlichungsnummer: WO 2010/034437

(56) Entgegenhaltungen:
- EP-A1- 1 653 435
- EP-A2- 1 274 062
- EP-A2- 1 672 411
- US-A1- 2002 021 391
- US-A1- 2004 155 854
- US-A1- 2008 172 569

## Beschreibung

Die Erfindung betrifft eine Anordnung zur bildgebenden Darstellung von Information, insbesondere für den Einsatz bei Kommunikationsendgeräten gemäß dem Oberbegriff des Anspruchs 1 sowie ein Verfahren zur bildgebenden Darstellung von Information, insbesondere für den Einsatz bei Kommunikationsendgeräten gemäß dem Oberbegriff des Anspruchs 7.

Es ist bekannt, dass Kommunikationsgeräte Bildschirmeinrichtungen zur Darstellung von Informationen aufweisen. Da diese Einrichtungen zusätzlich betrieben werden müssen, verbrauchen die Kommunikationsgeräte mehr Energie.

Die Energiegewinnung und Energienutzung steht jedoch zunehmend im Focus, nicht nur wegen der Kosten, sondern letztlich auch im Rahmen der Diskussionen zur globalen Erwärmung beziehungsweise generell zur effizienten Nutzung von Ressourcen.

Dies hat auch mittlerweile zu gesetzlichen Vorschriften aber auch zu einer Änderung im Käuferverhalten geführt, die ebenfalls eine Optimierung des Energiebedarfs erfordern.

Aus diesem Grund wird das Thema Energiesparen auch im Umfeld von Kommunikationssystemen, insbesondere für schnurgebundene Geräte in diesem Umfeld, immer wichtiger.

In EP 1 274 062 A2 ist ein elektronisches Gerät, bei dem es sich insbesondere um ein Mobiltelefon oder ein anderes tragbares elektronisches Gerät handeln kann, beschrieben, das mit zwei Anzeigeeinheiten unterschiedlicher Bauart und Funktion versehen ist, welche verschiedene Leistungsaufnahmen aufweisen.

Der vorliegenden Erfindung liegt die Aufgabe zugrunde, eine Anordnung und ein Verfahren anzugeben, die die vorstehend genannte Optimierung bei Elektrogeräten, insbesondere Geräten der Kommunikationstechnik, verbessern.

Gelöst wird diese Aufgabe durch eine Anordnung mit den Merkmalen des Patentanspruchs 1 und durch ein Verfahren mit den Merkmalen des Patentanspruchs 7.

Bei der erfindungsgemäßen Anordnung zur bildgebenden Darstellung von Information weist die Anordnung in Form eines Displays eines Telefons eine mindestens einen ersten Teilbereich und mindestens einen zweiten Teilbereich aufweisende Bildausgabeeinrichtung auf, wobei der erste Teilbereich derart ausgestaltet ist, dass die Darstellung der Information auf eine qualitativ hochwertige Bildgebung optimiert ist und der zweite Teilbereich derart ausgestaltet ist, dass er auf eine Bildgebung reduzierter Qualität hin optimiert ist, und der erste Teilbereich derart ausgestaltet ist, dass er nach einem Energiesparschema und ergänzend von einem Benutzer aktiv zu- und abschaltbar ist, wobei das Energiesparschema dazu eingerichtet ist, ein Abschalten von Teilen des ersten Teilbereichs zu verwirklichen, und das Abschalten von Teilen des ersten Teilbereichs erfolgt, wenn sich der dargestellte Inhalt des ersten Teilbereichs über einen Zeitraum nicht geändert hat, wobei der zweite Teilbereich keine Hintergrundbeleuchtung aufweist und stets aktiv betrieben wird.

Die erfindungsgemäße Anordnung beruht auf der Erkenntnis, dass viele Geräte, insbesondere im Büroumfeld Energie verbrauchen, zum Teil in unnötiger Weise auch dann, wenn der Benutzer nicht anwesend ist.

Es wurde ebenso erkannt, dass insbesondere beim Telefon stetig neu hinzukommende Funktionen zunehmende Anforderungen an die Darstellung der Informationen entstanden sind, die zum Großteil hochauflösende Displays für die jeweiligen Applikationen erfordern. Derartige Displays treiben den Stromverbrauch in die Höhe. Die erfindungsgemäße Anordnung verhindert diesen Effekt, da sie zu einer Segmentierung der Bildwiedergabeeinrichtung, insbesondere Display, mit zwei unterschiedlichen Darstellungskonzepten führt.

Hierdurch wird es möglich, Energie dadurch zu sparen, dass die Bildschirme optimiert auf den Verbrauch selektiv verwendet werden. Beispielsweise können Daten, die häufig oder sogar permanent angezeigt werden, wie Datum und Uhrzeit oder eine dem Endgerät zugeordnete Durchwahlnummer, auf dem Bereich dargestellt werden, der eine niedrige Auflösung bietet.

Bei einer vorteilhaften Weiterbildung der Erfindung ist der erste Teilbereich derart ausgestaltet, dass die Optimierung auf qualitativ hochwertige Bildgebung durch erste Mittel zur Hintergrundbeleuchtung erzeugt wird und der zweite Teilbereich ist derart ausgestaltet, dass die Optimierung auf Bildgebung reduzierter Qualität durch zweite Mittel zur Hintergrundbeleuchtung erreicht wird. Hierdurch wird dem Rechnung getragen, dass es Inhalte gibt, die nahezu ohne Hintergrundbeleuchtung dargeboten werden können oder sogar ganz ohne Hintergrundbeleuchtung, also einfach den Kontrast der Ausgabe zum Hintergrund nutzen, also beispielsweise die Ausgabe von alphanumerischen Zeichen und Symbolen auf monochromen LCD, und Inhalte, bei denen ohne Hintergrundbeleuchtung Details schwerer erkennbar wären wie Grafiken, Bilder sowie deren Kombination mit alphanumerischen Zeichen.

Gemäß einer Weiterbildung der Erfindung ist der erste Teilbereich derart ausgestaltet, dass die Helligkeit der Hintergrundbeleuchtung automatisch reduzierbar ist. Hierdurch lässt sich eine Steuerung ermöglichen, die ohne Eingriff eines Nutzers die Beleuchtung regelt und beispielsweise bei sich nicht ändernder Darstellung innerhalb eines vorgebbaren Zeitraums die Helligkeit reduziert.

Vorzugsweise wird dabei die erfindungsgemäße Anordnung derart weitergebildet, dass der erste Teilbereich derart ausgestaltet ist, dass er nach einem Energiesparschema zuschaltbar ist. Hierdurch lassen sich adaptive Energiesparverfahren realisieren, die flexibel auf einstellbare oder vorgegebene Szenarien der Benutzungsart und/oder -umgebung optimiert sind.

Bei einer weiteren bevorzugten Anordnung ist der erste Teilbereich derart ausgestaltet, dass das Energiesparschema ein zumindest teilweises Abschalten zumindest von Teilen des ersten Teilbereichs verwirklicht. Hierdurch wird die maximale Energieeinsparung gewährleistet. Diese Maßnahme kann beispielsweise durch ein Energieschema vorgesehen sein, wenn die Historie der Nutzung von Funktionen, die eine Bildausgabe hö**herer** Qualität verlangen, zeigt, dass diese für längere Zeitabschnitte nicht genutzt wurden oder sich der dargestellte Inhalt für einen längeren Zeitraum nicht geändert hat.

Bei einer alternativen bzw. ergänzenden Weiterbildung der erfindungsgemäßen Anordnung ist der erste Teilbereich derart ausgestaltet, dass die Optimierung auf qualitativ hochwertige Bildgebung durch erste Mittel zur hochauflösenden Darstellung von Bildinhalten erzeugt wird und der zweite Teilbereich derart ausgestaltet ist, dass die Optimierung auf Bildgebung reduzierter Qualität durch zweite Mittel zur Darstellung niedriger Auflösung erreicht wird. Hierdurch wird ein weiterer Freiheitsgrad zur Einstellung des Energiebedarfs bei gleichzeitiger Berücksichtigung der zur Darstellung erforderlichen Qualität zur Verfügung gestellt.

Bei dem erfindungsgemäßen Verfahren zur bildgebenden Darstellung von Information für ein Telefon wird bei einer mindestens einen ersten Teilbereich und mindestens einen zweiten Teilbereich aufweisenden Bildausgabeeinrichtung in Form eines Displays der erste Teilbereich aktiviert, wenn für eine Ausgabe mit qualitativ hochwertiger Bildgebung vorgesehene Daten vorliegen, und der zweite Teilbereich stets aktiv betrieben, wobei der erste Teilbereich nach einem Energiesparschema und ergänzend von einem Benutzer aktiv zu- und abgeschaltet wird, wobei das Energiesparschema ein Abschalten von Teilen des ersten Teilbereichs verwirklicht, und das Abschalten von Teilen des ersten Teilbereichs erfolgt, wenn sich der dargestellte Inhalt des ersten Teilbereichs über einen Zeitraum nicht geändert hat, wobei der zweite Teilbereich keine Hintergrundbeleuchtung aufweist und stets aktiv betrieben wird.

Das erfindungsgemäße Verfahren ermöglicht eine Energieeinsparung bei gleichzeitiger Gewährleistung einer Bereitstellung einer minimalen Informationsdarstellung, beispielsweise von häufig genutzten oder gängigen Informationen, welche durch Kommunikationsendgeräte dargestellt werden.

Wird nach Ausgabe der vorgesehenen Daten der erste Teilbereich zumindest teilweise deaktiviert, so kann die qualitativ hochwertige Darstellung bedarfsweise zu- oder weggeschaltet werden.

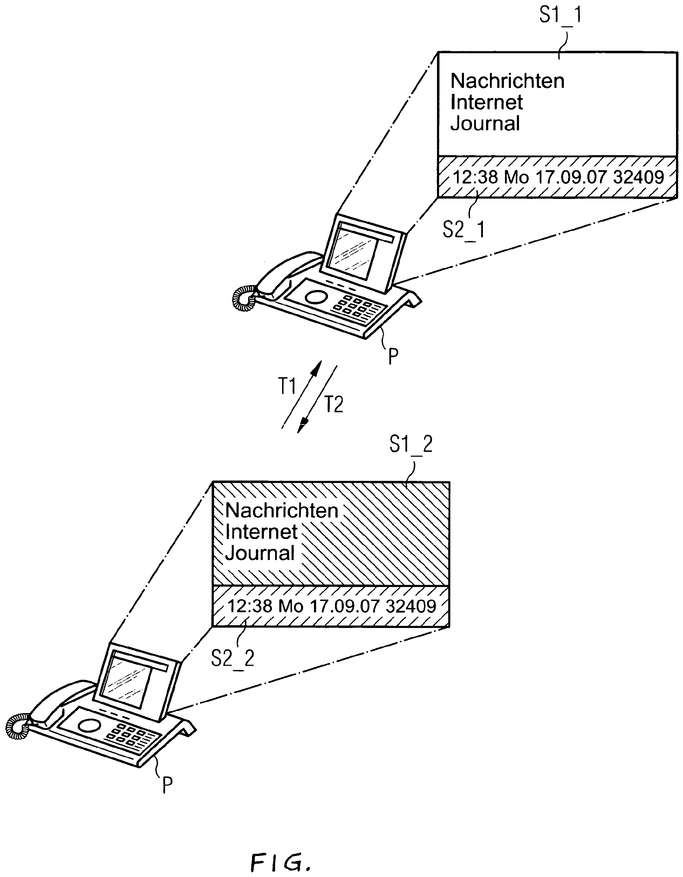

Weitere Vorteile sowie Details der Erfindung werden anhand eines in der einzigen Figur dargestellten Ausführungsbeispiels der Erfindung nachfolgend näher erläutert. Dabei zeigt die

Figur schematisch ein Ausführungsbeispiel der Erfindung in zwei erfindungsgemäßen Zuständen.

In der Figur ist schematisch ein Ausführungsbeispiel des erfindungsgemäßen Verfahrens und der erfindungsgemäßen Anordnung dargestellt.

Zu erkennen ist ein Telefon P mit einem Display. Dieses Display ist in ein erstes Segment S1_1, S1_2, sowie ein zweites Segment S2_1 S2_2 aufgeteilt.

Erfindungsgemäß ist dabei das erste Segment S1_1, S1_2 für die Ausgabe von Informationen zuständig, die eine höhere Qualität hinsichtlich der Darstellung erfordern.

Bei dem Ausführungsbeispiel ist in der Figur dazu ein Menü dargestellt, welches beispielsweise bei Auswahl eines der Punkte weitere Menüs erscheinen lassen würde, so dass eine immer feinere Verästelung die Folge wäre und daher höhere Anforderungen an die Darstellungsqualität gegeben sind. Erfindungsgemäß ist für diese Art von Daten daher die Ausgabe auf dem ersten Segment S1_1, S1_2 vorgesehen.

Hierzu wird das erste Segment zu einem ersten Zeitpunkt T1, an dem das Menü aufgerufen wird, von einem nichtbeleuchteten Zustand (S1_1) in einen Zustand, in dem die Displaybeleuchtung eingeschaltet ist (S1_2), gebracht.

Zu erkennen ist in der Figur ferner, dass sowohl vor dem ersten Zeitpunkt T1 als auch danach, das zweite Segment S2_1, S2_2 mit unveränderter Qualität Informationen ausgibt. Gemäß dem Ausführungsbeispiel handelt es sich dabei um Uhrzeit, Datum und Rufnummer des Telefons P. Diese Informationen können mit geringer Auflösung dargestellt werden. Auch wird keine Hintergrundbeleuchtung benötigt. Daher sei angenommen, dass es sich bei der Anordnung gemäß dem zweiten Segment S2_1, S2_2 gemäß dem Ausführungsbeispiel um einen monochromen LCD Bildschirm handelt.

Wird das Menü für einen längeren Zeitraum nicht verwendet, so geht zu einem zweiten Zeitpunkt T2 das erste Segment S1_1, S1_2 in den Ausgangszustand zurück. D.h., für das erste Segment S1_1, S1_2 wird die Hintergrundbeleuchtung abgeschaltet.

Denkbar ist es auch, dass der Benutzer aktiv diesen Zustand herbeiführt. Alternativ oder ergänzend kann das Display auch so gesteuert werden, dass verschiedene Energiesparschemata eingestellt werden, so dass verschiedenste Ereignisse als Auslöser für ein Ein- bzw. Ausschalten der Hintergrundbeleuchtung eingestellt werden können.

Ferner können die Energiesparschemata ein sukzessives mehrstufiges Reduzieren der Displaybeleuchtung vorsehen. Hierdurch wird dem Nutzer die Möglichkeit gegeben, zu reagieren, bevor die Bildschirmbeleuchtung vollständig abgeschaltet wird. Ferner können Timer hierfür so eingestellt werden, dass in Bedienungspausen Energie reduziert wird aber zugleich dennoch ein Mindestkomfort bei der Bedienung dadurch gewährleistet wird, dass der Benutzer nicht auf das Einschalten der Hintergrundbeleuchtung warten muss bzw. Aktionen zur Aktivierung durchführen muss, sondern die nächste Menüauswahl dies bewirkt.

Der erfindungswesentliche Vorteil basiert auf der Annahme, dass es in vielen Fällen im Ruhezustand des Telefons genügt, nur einige wichtige Informationen darzustellen.

Kern der Erfindung ist also die Segmentierung des Displays für diesen Zweck. Erfindungsgemäß kann für das Ausführungsbeispiel der Anordnung die Aufteilung in das erste Segment S1_1, S1_2 mit durch Verwendung marktüblicher Hintergrundbeleuchtung erfolgen, wobei Energiespartechnik wie Abschalten oder Dimmen eingesetzt wird und in das zweite Segment S2_1, S2_2 mit alternativer Hintergrundbeleuchtung, beispielsweise basierend auf LED Technologie bzw. monochrome LCD mit geringer Leistungsaufnahme, vorgesehen sein. In letzterem Segment werden wie erläutert dann Displayinhalte dargestellt, die laut Nutzerwillen oder werkseitiger Einstellung immer präsent sein müssen wie zum Beispiel Datum, Uhrzeit, Anrufer und/oder eigene Rufnummer etc.

Die Segmente können dabei zusammengefasst oder räumlich getrennt in einem Gerät angeordnet sein. Beispielsweise kann die niederqualitative Anzeige im Hörer integriert werden, das Display mit Ausgabe hoher Qualität dagegen im Gerät. Alternativ auch in einer räumlichen Einheit.

Neben verästelten Menüs wird auch bei Gebrauch bzw. Notwendigkeit graphischer Inhalte hoher Brillanz der im Energiesparmode befindliche Displayteil reaktiviert, so dass erfindungsgemäß der sonst übliche hohe Stromverbrauch lediglich zu dieser Nutzungszeit anfällt und der Energiebedarf drastisch reduziert wird.

## Patentansprüche

1. Anordnung zur bildgebenden Darstellung von Information in Form eines Displays eines Telefons (P), wobei
a) die Anordnung eine mindestens einen ersten Teilbereich (S1_1, S1_2) und mindestens einen zweiten Teilbereich (S2_1, S2_2) aufweisende Bildausgabeeinrichtung aufweist, wobei
b) der erste Teilbereich derart ausgestaltet ist, dass die Darstellung der Information auf eine qualitativ hochwertige Bildgebung optimiert ist und der zweite Teilbereich (S2_1, S2_2) derart ausgestaltet ist, dass er auf eine Bildgebung reduzierter Qualität hin optimiert ist, und
c) der erste Teilbereich (S1_1, S1_2) derart ausgestaltet ist, dass er nach einem Energiesparschema und ergänzend von einem Benutzer aktiv zu- und abschaltbar ist,
**dadurch gekennzeichnet, dass**
d) das Energiesparschema dazu eingerichtet ist, ein Abschalten von Teilen des ersten Teilbereichs (S1_1, S1_2) zu verwirklichen, und
e) das Abschalten von Teilen des ersten Teilbereichs (S1_1, S1_2) erfolgt, wenn sich der dargestellte Inhalt des ersten Teilbereichs (S1_1, S1_2) über einen Zeitraum nicht geändert hat,
wobei der zweite Teilbereich (S2_1, S2_2) keine Hintergrundbeleuchtung aufweist und stets aktiv betrieben wird.

2. Anordnung nach dem Anspruch 1, **dadurch gekennzeichnet, dass** der erste Teilbereich (S1_1, S1_2) derart ausgestaltet ist, dass die Optimierung auf qualitativ hochwertige Bildgebung durch erste Mittel zur Hintergrundbeleuchtung erzeugt wird und der zweite Teilbereich (S2_1, S2_2) derart ausgestaltet ist, dass die Optimierung auf Bildgebung reduzierter Qualität durch zweite Mittel zur Hintergrundbeleuchtung erreicht wird.

3. Anordnung nach Anspruch 2, **dadurch gekennzeichnet, dass** der erste Teilbereich (S1_1, S1_2) derart ausgestaltet ist, dass die Helligkeit der Hintergrundbeleuchtung automatisch reduzierbar ist.

4. Anordnung nach einem der vorhergehenden Ansprüche, **dadurch gekennzeichnet, dass** der erste Teilbereich (S1_1, S1_2) und der zweite Teilbereich (S2_1, S2_2) zusammengefasst oder räumlich getrennt in einem Gerät angeordnet sind.

5. Anordnung nach Anspruch 4, **dadurch gekennzeichnet, dass** ein Hörer vorhanden ist, wobei der erste Teilbereich (S1_1, S1_2) im Gerät und der zweite Teilbereich (S2_1, S2_2) im Hörer integriert ist.

6. Anordnung nach einem der vorhergehenden Ansprüche, **dadurch gekennzeichnet, dass** der erste Teilbereich (S1_1, S1_2) derart ausgestaltet ist, dass die Optimierung auf qualitativ hochwertige Bildgebung durch erste Mittel zur hochauflösenden Darstellung von Bildinhalten erzeugt wird und der zweite Teilbereich (S2_1, S2_2) derart ausgestaltet ist, dass die Optimierung auf Bildgebung reduzierter Qualität durch zweite Mittel zur Darstellung niedriger Auflösung erreicht wird.

7. Verfahren zur bildgebenden Darstellung von Information für ein Telefon (P), wobei
a) bei einer mindestens einen ersten Teilbereich (S1_1, S1_2) und mindestens einen zweiten Teilbereich (S2_1, S2_2) aufweisenden Bildausgabeeinrichtung in Form eines Displays
b) der erste Teilbereich (S1_1, S1_2) aktiviert wird, wenn für eine Ausgabe mit qualitativ hochwertiger Bildgebung vorgesehene Daten vorliegen, und der zweite Teilbereich (S2_1, S2_2) stets aktiv betrieben wird, wobei
c) der erste Teilbereich (S1_1, S1_2) nach einem Energiesparschema und ergänzend von einem Benutzer aktiv zu- und abgeschaltet wird,
**dadurch gekennzeichnet, dass**
d) das Energiesparschema ein Abschalten von Teilen des ersten Teilbereichs (S1_1, S1_2) verwirklicht, und
e) das Abschalten von Teilen des ersten Teilbereichs (S1_1, S1_2) erfolgt, wenn sich der dargestellte Inhalt (S1_1, S1_2) des ersten Teilbereichs (S1_1, S1_2) über einen Zeitraum nicht geändert hat, wobei der zweite Teilbereich (S2_1, S2_2) keine Hintergrundbeleuchtung aufweist und stets aktiv betrieben wird.

8. Verfahren nach dem vorhergehenden Anspruch, **dadurch gekennzeichnet, dass** nach Ausgabe der vorgesehenen Daten der erste Teilbereich (S1_1, S1_2) zumindest teilweise deaktiviert wird.

9. Verfahren nach Anspruch 7 oder 8, **dadurch gekennzeichnet, dass** ein Zuschalten des ersten Teilbereiches (S1_1, S1_2) durch eine Menüauswahl des Benutzers bewirkt wird.

## Claims

1. A system for the image-based display of information in the form of a display of a telephone (P), wherein
a) the system comprises an image output device comprising at least one first section (S1_1, S1_2) and at least one second section (S2_1, S2_2), wherein
b) the first section is configured so that the display of the information is optimized for high-quality imaging, and the second section (S2_1, S2_2) is configured so that it is optimized for imaging of reduced quality, and
c) the first section (S1_1, S1_2) is configured so that it can be actively switched on and off by a user in accordance with an energy saving scheme and on a supplementary basis, **characterized in that**
d) the energy saving scheme is configured to achieve a switching off of parts of the first section (S1_1, S1_2) and
e) the switching off of parts of the first section (S1_1, S1_2) occurs when the displayed content of the first section (S1_1, S1_2) has not changed over a period of time,
wherein the second section (S2_1, S2_2) has no backlighting and is always actively operated.

2. The system according to claim 1, **characterized in that** the first section (S1_1, S1_2) is configured so that the optimization for high-quality imaging is generated by first means of backlighting, and the second section (S2_1, S2_2) is configured so that the optimization for imaging of reduced quality is achieved by second means of backlighting.

3. The system according to claim 2, **characterized in that** the first section (S1_1, S1_2) is configured so that the brightness of the backlighting can be reduced automatically.

4. The system according to any one of the preceding claims, **characterized in that** the first section (S1_1, S1_2) and the second section (S2_1, S2_2) are arranged combined or spatially separate in an apparatus.

5. The system according to claim 4, **characterized in that** a receiver is present, wherein the first section (S1_1, S1_2) is integrated in the apparatus and the second section (S2_1, S2_2) is integrated in the receiver.

6. The system according to any one of the preceding claims, **characterized in that** the first section (S1_1, S1_2) is configured so that the optimization for high-quality imaging is generated by first means of high-resolution display of image contents, and the second section (S2_1, S2_2) is configured so that the optimization for imaging of reduced quality is achieved by second means of low-resolution display.

7. A method for the image-based display of information for a telephone (P), wherein,
a) in an image output device comprising at least one first section (S1_1, S1_2) and at least one second section (S2_1, S2_2), in the form of a display,
b) the first section (S1_1, S1_2) is activated when data provided for an output with high-quality imaging is present and the second section (S2_1, S2_2) is always actively operated, wherein
c) the first section (S1_1, S1_2) is actively switched on and off by a user in accordance with an energy saving scheme and on a supplementary basis,
**characterized in that**
d) the energy saving scheme achieves a switching off of parts of the first section (S1_1, S1_2), and
e) the switching off of parts of the first section (S1_1, S1_2) occurs when the displayed content (S1_1, S1_2) of the first section (S1_1, S1_2) has not changed over a period of time, wherein the second section (S2_1, S2_2) comprises no backlighting and is always actively operated.

8. The method according to the preceding claim, **characterized in that**, after the output of the provided data, the first section (S1_1, S1_2) is at least partially deactivated.

9. The method according to claim 7 or 8, **characterized in that** a switching on of the first section (S1_1, S1_2) is brought about by a menu selection of the user.

## Revendications

1. Dispositif d'affichage d'information sous la forme d'un écran d'un téléphone (P), dans lequel
a) le dispositif présente un équipement de sortie d'image présentant au moins une première zone partielle (S1_1, S1_2) et au moins une seconde zone partielle (S2_1, S2_2), dans lequel
b) la première zone partielle est conçue de sorte que l'affichage de l'information est optimisée pour une imagerie de haute qualité et la seconde zone partielle (S2_1, S2_2) est conçue de manière à être optimisée pour une imagerie de qualité réduite, et
c) la première zone partielle (S1_1, S1_2) est conçue de manière à pouvoir être activée et désactivée activement selon un schéma d'économie d'énergie et de plus par un utilisateur, **caractérisé en ce que**
d) le schéma d'économie d'énergie est configuré pour réaliser la désactivation de parties de la première zone partielle (S1_1, S1_2), et
e) la désactivation de parties de la première zone partielle (S1_1, S1_2) a lieu si le contenu affiché de la première zone partielle (S1_1, S1_2) n'a pas changé pendant une certaine période,
dans lequel la seconde zone partielle (S2_1, S2_2) ne présente pas de rétro-éclairage et fonctionne toujours activement.

2. Dispositif selon la revendication 1, **caractérisé en ce que** la première zone partielle (S1_1, S1_2) est conçue de sorte que l'optimisation pour une imagerie de haute qualité est générée par des premiers moyens de rétroéclairage et la seconde zone partielle (S2_1, S2_2) est conçue de sorte que l'optimisation pour l'imagerie de qualité réduite est réalisée par des seconds moyens de rétro-éclairage.

3. Dispositif selon la revendication 2, **caractérisé en ce que** la première zone partielle (S1_1, S1_2) est conçue de sorte que la luminosité du rétroéclairage peut être automatiquement réduite.

4. Dispositif selon l'une des revendications précédentes, **caractérisé en ce que** la première zone partielle (S1_1, S1_2) et la seconde zone partielle (S2_1, S2_2) sont disposées de manière combinée ou spatialement séparée dans un appareil.

5. Dispositif selon la revendication 4, **caractérisé en ce qu'**un combiné est présent, dans lequel la première zone partielle (S1_1, S1_2) est intégrée dans l'appareil et la seconde zone partielle (S2_1, S2_2) est intégrée dans le combiné.

6. Dispositif selon l'une des revendications précédentes, **caractérisé en ce que** la première zone partielle (S1_1, S1_2) est conçue de sorte que l'optimisation pour une imagerie de haute qualité est générée par des premiers moyens d'affichage haute résolution de contenus d'images et la seconde zone partielle (S2_1, S2_2) est conçue de sorte que l'optimisation pour une imagerie de qualité réduite est réalisée par des seconds moyens d'affichage basse résolution.

7. Procédé d'affichage d'information pour un téléphone (P), dans lequel
a) dans le cas d'un équipement de sortie d'image sous forme d'écran présentant au moins une première zone partielle (S1_1, S1_2) et au moins une seconde zone partielle (S2_1, S2_2)
b) la première zone partielle (S1_1, S1_2) est activée lorsque des données prévues pour une sortie avec une imagerie de haute qualité sont présentes, et la seconde zone partielle (S2_1, S2_2) fonctionne toujours activement, dans lequel
c) la première zone partielle (S1_1, S1_2) est activée et désactivée activement selon un schéma d'économie d'énergie et de plus par un utilisateur,
**caractérisé en ce que**
d) le schéma d'économie d'énergie réalise une désactivation de parties de la première zone partielle (S1_1, S1_2), et
e) la désactivation de parties de la première zone partielle (S1_1, S1_2) a lieu si le contenu affiché (S1_1, S1_2) de la première zone partielle (S1_1, S1_2) n'a pas changé pendant une certaine période, dans lequel la seconde zone partielle (S2_1, S2_2) ne présente pas de rétroéclairage et fonctionne toujours activement.

8. Procédé selon la revendication précédente, **caractérisé en ce que**, après la sortie des données prévues, la première zone partielle (S1_1, S1_2) est au moins partiellement désactivée.

9. Procédé selon la revendication 7 ou 8, **caractérisé en ce que** l'activation de la première zone partielle (S1_1, S1_2) est effectuée par une sélection de menu de l'utilisateur.
